# EUROPEAN PATENT APPLICATION

(11) **EP 4 797 578 A1**
(43) Date of publication of application: **26.08.2026**
(21) Application number: 26151654.6
(22) Date of filing: 13.01.2026
(51) Int. Cl.: H04J 3/06

(54) **DETERMINING END-TO-END TRANSPARENT CLOCK STEPS REMOVED**

(30) Priority: 19.02.2025 US 202519056886
(71) Applicant: Nokia Solutions and Networks Oy, 02610 Espoo (FI)
(72) Inventor: GOWTHAMAN, Vinoth, Kanata, K2K 0H2 (CA); ROBERTS, Peter, Ottawa, K2K 2T6 (CA); DONTHI, Shiva Sri Krishna, Stittsville, K2S 2X4 (CA); CLIFFORD, Ross, Kanata, K2T 0K2 (CA)
(74) Representative: Bryers Intellectual Property Ltd

(57) **Abstract**

In a Precision Time Protocol (PTP) clock-distribution system, each transparent clock (TC) along a link between a time transmitter (TT) and a time receiver (TR) is able to increment a stepsRemoved field of a PTP message that traverses the TC, such that, at the receiving node of the PTP message (e.g., the TR for certain sync, follow-up, and delay-response messages and the TT for certain delay-request messages), the stepsRemoved field indicates the number of transparent clocks (TC) along the link between the TT and the TR. The information may be used to prioritize certain links over others.

## Description

### Field of the Disclosure

The present disclosure relates to computer networks and, more specifically but not exclusively, to computer networks that conform to a Precision Time Protocol (PTP) standard.

### Background

In a Precision Time Protocol (PTP) clock-distribution system conforming to the IEEE Std 1588-2008 (or its revised version of IEEE Std 1588-2019) standard, a PTP time transmitter (TT) functions as a time reference for one or more PTP time receivers (TRs), where the TT node maintains a PTP reference clock and each TR node maintains its own local clock that it disciplines to match the time at the TT node.

In a PTP clock-distribution system, TT nodes and TR nodes exchange PTP messages (i.e., sync, follow-up, delay-request, and delay-response messages) over links that may have one or more intermediate nodes, where some of the intermediate nodes may be routers that do not modify the PTP messages, while others of the intermediate nodes are able to modify at least some of the PTP messages. Such latter intermediate nodes are referred to as transparent clock (TC) nodes.

ATC node is capable of recording the arrival time and the departure time of a PTP message, calculating a local residence time based on the difference between the departure time and the arrival time, and adding its local residence time to the value stored in a correction field (called correctionField) in the header of the PTP message, such when the PTP message arrives at its destination (e.g., a TR node for PTP sync messages and a TT node for PTP delay-request messages), the value in the correctionField is the sum of the residence times for all of the TC nodes along the link over which the PTP message traversed.

PTP TT, TR, and TC nodes are able to operate in one-step PTP modes or two-step PTP modes or both. Some nodes along a link may operate in one-step PTP modes, while other nodes along that same link may operate in two-step PTP modes. Note that, under the IEEE Std 1588-2019 standard, the configuration of one-step mode vs. two-step mode is per PTP port.

In a one-step PTP sync mode, a TT node transmits a PTP sync message containing the local transmit time (T1) of the PTP sync message. In a two-step PTP sync mode, the TT node transmits a PTP sync message without T1 and instead transmits a PTP follow-up message containing T1 for the previously transmitted PTP sync message.

In the one-step PTP sync mode, a TC node adds its local residence time to update the correctionField value in the PTP sync message. In the two-step PTP sync mode, a TC node adds the local residence time for the PTP sync message to the correctionField value in the corresponding PTP follow-up message. In that case, the TR node will add the correctionField value in the received PTP sync message and the correctionField value in the corresponding received PTP follow-up message to calculate the sum of the residence times for all of the TC nodes along the link over which the PTP sync message traversed.

In a one-step PTP delay-request mode, the TR node transmits a PTP delay-request message to the TT node, and a TC node along that link adds its local residence time to the correctionField value in the PTP delay-request message, such that the value in the correctionField of the PTP delay-request message received at the TT node will be the sum of the residence times for all of the TC nodes along the link over which the PTP delay-request message traversed. The TT node will then include that correctionField value in the corresponding PTP delay-response message transmitted to the TR node. In that case, the TC nodes will not modify the correctionField value in the PTP delay-response message.

In a two-step PTP delay-request mode, the TR node transmits a PTP delay-request message to the TT node, and a TC node along that link calculates and records its local residence time, but does not adjust the correctionField value in the PTP delay-request message. Instead, when the corresponding PTP delay-response message arrives at each TC node, the TC node will add its stored local residence time for the corresponding PTP delay-request message to the value in the correctionField of the PTP delay-response message, such that the value in the correctionField of the PTP delay-response message received at the TR node will be the sum of the residence times for all of the TC nodes along the link over which the previously transmitted PTP delay-request message traversed.

### SUMMARY

An objective of the present disclosure is to provide a mechanism for determining and propagating the number of transparent clock nodes within a clock-distribution system, thereby improving the accuracy of time synchronization between time transmitter and time receiver nodes. For example, an objective of the present disclosure is to provide a node for a clock-distribution system that is capable of receiving and transmitting information about the number of intermediate transparent clock nodes, thereby enabling more precise time synchronization.

The foregoing and other objectives are achieved by the features of the independent claims.

Further implementation forms are apparent from the dependent claims, the description and the Figures.

A first aspect of the present disclosure provides a node for a clock-distribution system having time transmitter (TT) node and a time receiver (TR) node interconnected by a link having one or more intermediate transparent clock (TC) nodes, the node comprising means to cause the node at least to: receive a first message having a first-message field for storing a number of TC nodes between the TT node and the TR node, and transmit a second message having a second-message field for storing the number of TC nodes between the TT node and the TR node.

In an implementation of the first aspect, the node can comprise the TT node.

In one example, in one-step sync mode: the second message can comprise a sync message, and the TT node can transmit the sync message having a value of zero stored in the second-message field.

In another example, in two-step sync mode: the second message can comprise a follow-up message, and the TT node can transmit the follow-up message having a value of zero stored in the second-message field.

In one-step delay-request mode: the first message can comprise a delay-request message, the first-message field can store the number of TC nodes, the second message can comprise a delay-response message corresponding to the delay-request message, and the TT node can transmit the delay-response message with the number of TC nodes from the delay-request message stored in the second-message field.

In two-step delay-request mode: the second message can comprise a delay-response message and the TT node can transmit the delay-response message with a value copied from the first message stored in the second-message field.

In an implementation of the first aspect, the node can comprise the TR node.

In one-step sync mode: the first message can comprise a sync message, and the TR node can receive the sync message having the number of TC nodes stored in the first-message field.

In one-step sync mode: the first message can comprise a follow-up message, and the TR node can receive the follow-up message having the number of TC nodes stored in the first-message field.

In two-step sync mode: the first message can comprise a follow-up message, and the TR node can receive the follow-up message having the number of TC nodes stored in the first-message field.

In one-step delay-request mode: the second message can comprise a delay-request message, the TR node can transmit the delay-request message with a value of zero stored in the second-message field, the first message can comprise a delay-response message corresponding to the delay-request message, and the first-message field can store the number of TC nodes in the link over which the delay-request message was transmitted.

In two-step delay-request mode: the first message can comprise a delay-response message, and the first-message field can store the number of TC nodes in the link over which the delay-response message was transmitted.

In an implementation of the first aspect, the node can comprise one of the TC nodes.

In one-step sync mode: the first message can comprise a sync message, the TC node can increment the first-message field in the sync message, and the TC node can transmit the sync message with the incremented first-message field.

In two-step sync mode: the first message can comprise a follow-up message, the TC node can increment the first-message field in the follow-up message, and the TC node can transmit the follow-up message with the incremented first-message field.

In one-step delay-request mode: the first message can comprise a delay-request message, the TC node can increment the first-message field in the delay-request message, the TC node can transmit the delay-request message with the incremented first-message field, the second message can comprise a delay-response message corresponding to the delay-request message, and the TC nodes can maintain the second-message field in the delay-response message.

In two-step delay-request mode: the first message can comprise a delay-response message, the TC node can increment the first-message field in the delay-response message, and the TC node can transmit the delay-response message with the incremented first-message field.

In an implementation of the first aspect, the clock-distribution system is a Precision Time Protocol (PTP) system.

A second aspect of the present disclosure provides a method for a node for a clock-distribution system having time transmitter (TT) node and a time receiver (TR) node interconnected by a link having one or more intermediate transparent clock (TC) nodes, the method comprising the node: receiving a first message having a first-message field for storing a number of TC nodes between the TT node and the TR node, and transmitting a second message having a second-message field for storing the number of TC nodes between the TT node and the TR node.

These and other aspects of the invention will be apparent from the embodiment(s) described below.

### BRIEF DESCRIPTION OF THE DRAWINGS

Embodiments of the disclosure will become more fully apparent from the following detailed description, the appended claims, and the accompanying drawings in which like reference numerals identify similar or identical elements.
FIG. 1 is a simplified block diagram of a part of a PTP clock-distribution system of the present disclosure;
FIGs. 2-4 show prior-art Tables 44-46, respectively, from the IEEE Std 1588^{™}-2019 standard; and
FIG. 5 is a simplified hardware block diagram of an example node that can be used to implement any of the nodes of FIG. 1.

### DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

As described above, conventional PTP messaging provides the TR node with the sum of the residence times for all of the TC nodes along the link over which either a PTP sync message or a PTP delay-request message is transmitted, but there is no identification how many TC nodes are in such a link. Since each TC node will degrade the quality of the time synchronization process, knowing the number of TC nodes in a link between the TT node and the TR node would allow the operator to determine if the link is acceptable for the target performance. The operator could then take action to select an alternative timing path or downgrade the expectations of time performance.

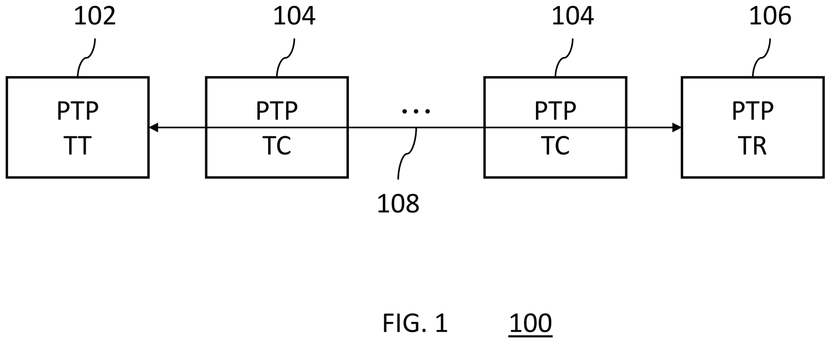

FIG. 1 is a simplified block diagram of a part of a PTP clock-distribution system 100 having a TT node 102 connected to a TR node 106 by a link 108 having one or more intermediate TC nodes 104. Note that the link 108 may also have one or more intermediate routers (not shown in FIG. 1) that are not transparent clocks and are not involved in the processing related to the present disclosure. Those skilled in the art will understand that link 108 may be one of a number of different links of a link aggregation group (LAG) (not fully depicted in FIG. 1) connecting the TT node 102 and the TR node 106, where different links in the LAG may have the same or different (overlapping or non-overlapping) sets of intermediate TC nodes 104. Those skilled in the art will also understand that the PTP clock-distribution system 100 may have additional TR nodes connected to the TT node 102 via other LAGs.

According to certain embodiments of the present disclosure, the PTP system 100 supports modified PTP messages, where each of (i) the modified PTP sync, follow-up, and delay-response messages transmitted by the TT node 102 to the TR node 106 and (ii) the new PTP delay-request messages transmitted by the TR node 106 to the TT node 102 has a new stepsRemoved field used to identify the number of intermediate TC nodes 104 along the link 108.

In particular, in one-step PTP sync mode (having a PTP sync message and no PTP follow-up message), the TT node 102 transmits a sync message over the link 108 towards the TR node 106 with value 0 stored in the sync message's stepsRemoved field. As the sync message traverses each TC node 104 along the link 108, the TC node 104 increments the value in the stepsRemoved field, such that, when the sync message arrives at the TR node 106, the value in the stepsRemoved field will be the number of TC nodes 104 along the link 108.

In two-step PTP sync mode (having a PTP sync message followed by a PTP follow-up message traversing the same or different link as the PTP sync message), the TT node 102 transmits the follow-up message over the link 108 towards the TR node 106 with value 0 stored in the follow-up message's stepsRemoved field. As the follow-up message traverses each TC node 104 along the link 108, the TC node 104 increments the value in the stepsRemoved field, such that, when the follow-up message arrives at the TR node 106, the value in the stepsRemoved field will be the number of TC nodes 104 along the link 108.

Note that, in two-step PTP sync mode, the PTP sync message is not updated by the TC nodes 104. As such, the stepsRemoved field does not indicate the number of TC nodes 104 along the link used to transmit the sync message, whether that link is the same as or different from the link 108 used to transmit the corresponding follow-up message.

In one-step PTP delay-request mode, the TR node 106 transmits a delay-request message over the link 108 towards the TT node 102 with value 0 stored in the sync message's stepsRemoved field. As the delay-request message traverses each TC node 104 along the link 108, the TC node 104 increments the value in the stepsRemoved field, such that, when the delay-request message arrives at the TT node 102, the value in the stepsRemoved field will be the number of TC nodes 104 along the link 108. The TT node 102 then transmits a corresponding delay-response message to the TR node 106 with that same value in the stepsRemoved field, which the TC nodes 104 do not further modify, such that, when the delay-response message arrives at the TR node 106, the value in the stepsRemoved field will be the number of TC nodes 104 along the link 108 over which the delay-request message was transmitted. Note that, since the corresponding delay-response message identifies the delay-request message, the TR node 106 associates the stepsRemoved value in the delay-response message with the link 108 over which the delay-request message was transmitted even when the delay-response message is transmitted over a different link between the TT node 102 and the TR node 106.

In two-step PTP delay-request mode, the TC nodes 104 do not modify the stepsRemoved field in the PTP delay-request message, but the TC modes 104 do modify the stepsRemoved field in the PTP delay-response message. In particular, the TT node 102 transmits a delay-response message over the link 108 towards the TR node 106 with the value copied from the corresponding delay-request message stored in the delay-response message's stepsRemoved field. As the delay-response message traverses each TC node 104 along the link 108, the TC node 104 increments the value in the stepsRemoved field, such that, when the delay-response message arrives at the TR node 106, the value in the stepsRemoved field will be the number of TC nodes 104 along the link 108 whether the corresponding delay-request message was transmitted over that same link 108 or a different link.

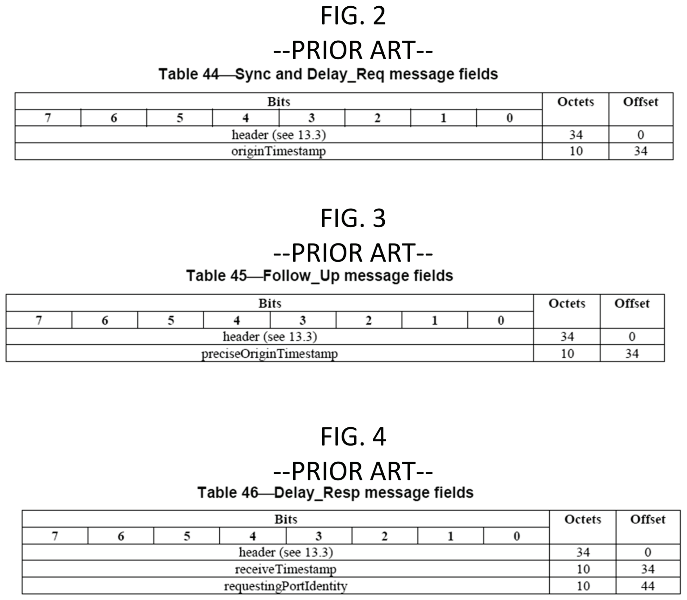

FIGs. 2-4 show Tables 44-46, respectively, from the IEEE Std 1588-2019 standard, where Table 44 shows the message fields in the PTP sync and delay-request messages, Table 45 shows the message fields in the PTP follow-up messages, and Table 46 shows the message fields in the PTP delay-response messages. In one possible implementation of the present disclosure, the new stepsRemoved field is an octet appended to the end of the message fields in Tables 44-46.

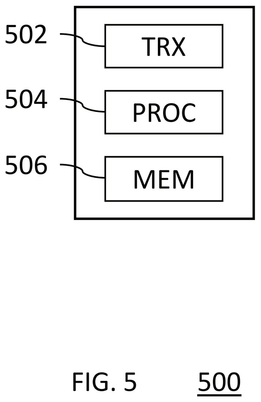

FIG. 5 is a simplified hardware block diagram of an example node 500 that can be used to implement any of the nodes 102, 104, and 106 of FIG. 1. As shown in FIG. 5, the node 500 includes (i) communication hardware (e.g., wireless, wireline, and/or optical transceivers (TRX)) 502 that supports communications with other nodes, (ii) one or more processors (e.g., CPU and/or GPU microprocessors) 504 that control the operations of the node 500 and/or process data within the node 500, and (iii) one or more memories (e.g., RAM, ROM) 506 that store code executed by the processors 504 and/or data generated and/or received by the node 500.

Although the disclosure has been described in the context of PTP systems that conform to the IEEE Std 1588-2008 and IEEE Std 1588-2019 standards and having one or more links between a PTP time transmitter and a PTP time receiver, those skilled in the art will understand that the present disclosure can be implemented in any suitable context to determine a number of intermediate nodes that exist in a path between a transmitter and a receiver, where there are one or more (wired, wireless, or optical) paths between the receiver and the transmitter.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure.

As used herein in reference to an element and a standard, the terms "compatible" and "conform" mean that the element communicates with other elements in a manner wholly or partially specified by the standard and would be recognized by other elements as sufficiently capable of communicating with the other elements in the manner specified by the standard. A compatible or conforming element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits. The term "non-transitory," as used herein, is a limitation of the medium itself (i.e., tangible, not a signal) as opposed to a limitation on data storage persistency (e.g., RAM vs. ROM).

Signals and corresponding terminals, nodes, ports, links, interfaces, or paths may be referred to by the same name and/or label and are interchangeable for purposes here.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the present disclosure and that methods and structures within the scope of these claims and their equivalents be covered thereby.

## Claims

1. A node for a clock-distribution system having time transmitter (TT) node and a time receiver (TR) node interconnected by a link having one or more intermediate transparent clock (TC) nodes, the node comprising means to cause the node at least to:
receive a first message having a first-message field for storing a number of TC nodes between the TT node and the TR node; and
transmit a second message having a second-message field for storing the number of TC nodes between the TT node and the TR node.

2. The node of claim 1, wherein the node is the TT node.

3. The node of claim 2, wherein, in one-step sync mode:
the second message is a sync message; and
the TT node transmits the sync message having a value of zero stored in the second-message field.

4. The node of claim 2, wherein, in two-step sync mode:
the second message is a follow-up message; and
the TT node transmits the follow-up message having a value of zero stored in the second-message field.

5. The node of claim 2, wherein, in one-step delay-request mode:
the first message is a delay-request message;
the first-message field stores the number of TC nodes;
the second message is a delay-response message corresponding to the delay-request message; and
the TT node transmits the delay-response message with the number of TC nodes from the delay-request message stored in the second-message field.

6. The node of claim 2, wherein, in two-step delay-request mode:
the second message is a delay-response message; and
the TT node transmits the delay-response message with a value copied from the first message stored in the second-message field.

7. The node of claim 1, wherein the node is the TR node.

8. The node of claim 7, wherein, in one-step sync mode:
the first message is one of: a sync message, or a follow-up message; and
when the first message is a sync message, the TR node receives the sync message having the number of TC nodes stored in the first-message field, or
when the first message is a follow-up message, the TR node receives the follow-up message having the number of TC nodes stored in the first-message field.

9. The node of claim 7, wherein, in one-step delay-request mode:
the second message is a delay-request message;
the TR node transmits the delay-request message with a value of zero stored in the second-message field;
the first message is a delay-response message corresponding to the delay-request message; and
the first-message field stores the number of TC nodes in the link over which the delay-request message was transmitted.

10. The node of claim 7, wherein, in two-step delay-request mode:
the first message is a delay-response message; and
the first-message field stores the number of TC nodes in the link over which the delay-response message was transmitted.

11. The node of claim 1, wherein the node is one of the TC nodes.

12. The node of claim 11, wherein, in one-step sync mode:
the first message is a sync message;
the TC node increments the first-message field in the sync message; and
the TC node transmits the sync message with the incremented first-message field.

13. The node of claim 11, wherein, in two-step sync mode:
the first message is a follow-up message;
the TC node increments the first-message field in the follow-up message; and
the TC node transmits the follow-up message with the incremented first-message field.

14. The node of claim 11, wherein, in one-step delay-request mode:
the first message is a delay-request message;
the TC node increments the first-message field in the delay-request message;
the TC node transmits the delay-request message with the incremented first-message field;
the second message is a delay-response message corresponding to the delay-request message; and
the TC nodes maintains the second-message field in the delay-response message.

15. The node of claim 11, wherein, in two-step delay-request mode:
the first message is a delay-response message;
the TC node increments the first-message field in the delay-response message; and
the TC node transmits the delay-response message with the incremented first-message field.
